(19) Europäisches Patentamt
European Patent Office
Office européen des brevets

(11) **EP 3 290 127 B1**

(12) **EUROPEAN PATENT SPECIFICATION**

(45) Date of publication and mention
of the grant of the patent:
**18.09.2024 Bulletin 2024/38**

(21) Application number: **17188101.4**

(22) Date of filing: **28.08.2017**

(51) International Patent Classification (IPC):
**F16C 1/26** *(2006.01)* **A46B 13/02** *(2006.01)*

(52) Cooperative Patent Classification (CPC):
**B08B 9/0436; A46B 13/001; A46B 13/02;
A46D 1/0207; B08B 9/043; B29C 53/582;
F16C 1/02; F16C 1/267;** A46B 2200/3006;
A46B 2200/3073; B08B 9/045; B29C 53/60

(54) **FLEXIBLE TORSION SHAFT AND AN ARRANGEMENT USING IT AND A CLEANING DEVICE FOR AIR-CONDITIONING DUCTS**

FLEXIBLE TORSIONSWELLE UND ANORDNUNG DAMIT UND REINIGUNGSVORRICHTUNG FÜR KLIMAANLAGENKANÄLE

ARBRE DE TORSION FLEXIBLE ET AGENCEMENT L'UTILISANT ET DISPOSITIF DE NETTOYAGE DE CONDUITS DE CLIMATISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2016 FI 20165649**

(43) Date of publication of application:
**07.03.2018 Bulletin 2018/10**

(73) Proprietor: **Bierkühl OY
50600 Mikkeli (FI)**

(72) Inventor: **HILTUNEN, Pentti
50600 MIKKELI (FI)**

(74) Representative: **Kespat Oy
Vasarakatu 1
40320 Jyväskylä (FI)**

(56) References cited:
EP-A2- 0 213 816       WO-A1-2016/142586
DE-A1- 19 962 073      DE-U1- 202012 010 763
US-A- 2 573 361        US-A- 4 218 895
US-A- 5 636 551

• **SPECIALCHEM SA: "Elongation at Break or
Fracture Strain: Technical Properties of
Plastics", 22 December 2015 (2015-12-22), web,
XP055865023, Retrieved from the Internet
<URL:https://omnexus.specialchem.com/polym
er-properties/properties/elongation-at-break#P
M-PP> [retrieved on 20211123]**
• **SPECIALCHEM SA: "Strength at Break (Tensile):
Technical Properties of Plastics", 21 December
2015 (2015-12-21), web, XP055865024, Retrieved
from the Internet
<URL:https://omnexus.specialchem.com/polym
er-properties/properties/strength-at-break-tensil
e> [retrieved on 20211123]**

**Description**

The present invention relates to a flexible torsion shaft defined in the appended Claim 1, as well as an arrangement using a casing tube. A cleaning device for air-conditioning ducts is one particular embodiment.

The flexible shaft according to the invention is suitable for transmitting a torsion force in many applications, particularly when used inside a casing tube. In particular, this case discloses an air-conditioning cleaning device, which is known from, among others, Finnish patents 94221 and 108408 and from utility model 9567. In the device for cleaning air-conditioning ducts, a flexible shaft is used to rotate a cleaning brush. The brush device used in the solution comprises a motor-driven brush, which is supported on the wall of the duct with the aid of a carrier brush. The flexible operating arm comprises a casing tube and a braided steel cable fitted inside it. The flexible shaft is rigidly attached from the casing tube to the body of the drive motor. The drive shaft is rigidly joined to the shaft of the motor, so that torque is efficiently transmitted in the long, flexible shaft to the brush head. During cleaning, the brush head is operated in both directions.

A steel cable of this kind can be wound to either the right or the left. Its torque-transmitting capability is therefore not symmetrical. A second drawback with this known solution is that the steel cable is heavy, with the reel weighing as much as several tens of kilogrammes. Document US 2,573,361 presents a torsion shaft having a glass fibre core and a plurality of left- and right-hand wrapped helixes of single strands and a hard adhesive interposed between the fibre strands for bonding strands together.

The applicant's PCT-application, document WO 2016/142586 _A1 (falling within the terms of Art. 54(3) EPC) presents a flexible torsion shaft, where a core element and a reinforcement comprising a polymeric base substance and a multi-layered reinforcing-fibre reinforcement. Each reinforcing-fibre layer is wound around the core element by hoop winding using a wide range of angles. There is in at least one reinforcing-fibre layer a reinforcing-fibre reinforcement wound alternate in an opposite direction. The document teaches to increase the winding angle as the average layer diameter increases and to take several reinforcing-fibre layers into the same impregnation polymeric base substance, which is absorbing the entire layer.

Specifically, this document teaches to use epoxy as polymer base substance, but in the outmost layer polyurethane can be used. In the flexible torsion shafts the winding angles vary 45° - 75°, and even up to 85°.

The present invention is intended to present a high-powered flexible torsion shaft exploiting the great tensile strength of fibre without cutting the structure open.

Flexible composite torsion shaft (12) is intended to be attached to a drive shaft, and having a core element (18, 18') and a reinforcement comprising a polymeric base substance (17, 17') and a multi-layer (16, 16', 16'', 16''') reinforcing-fibre reinforcement, with each reinforcing fibre layer being wound around the core element (18) by hoop-winding, according to independent claim 1.

The reinforcing fibre layer thus comprises one winding layer at a selected angle. In addition, on the torsion shaft or within optional casing tube there is preferably a PTFE coating, preferably a Xylan 1010 PTFE coating (Teflon®). This significantly reduces friction.

The torsion shaft according to the invention is characterized by being the polymeric base substance (17, 17') is polyurethane-based polymer and said increasing winding angles are in the range of 45 - 57 degrees.

The device according to the invention for cleaning air-conditioning ducts comprises reeling means fitted to the casing tube for the flexible torsion shaft, a drive-motor mechanism for rotating the flexible torsion shaft, and a brush device attached to the free end of the flexible torsion shaft, in which the flexible torsion shaft and the casing tube are according to what is described above.

In the manufacturing stage, polymer is fed from consecutive extruders, but the polymer finally forms a network, homogenously combining all the feed layers.

The solution according to the invention has the advantage that the cross-braided composite cable has very great torsion-strength symmetrical torque properties relative to its weight. It is also considerably lighter than a steel cable. These advantages make the torsion shaft, and through it the entire cleaning device, more user-friendly. Naturally, symmetricity can be deviated from by winding a chosen amount more in a chosen direction than in the opposite direction.

A polyurethane-based polymer and a winding angle of 45 - 57 degrees are used to create a high-powered and flexible torsion shaft. Further, in an improved embodiment a polymer is used, which has a great elongation and tensile strength . The great elongation and tensile strength make it possible to exploit the great tensile strength of the fibre without the fibre cutting the structure open.

The body of the torsion shaft is preferably of epoxy and the reinforcing fibres are mainly of glass fibre. Polyamide (Nylon®), aramid (Kevlar®), UHMWPE (Dyneema ®), and carbon fibre can also be used for this purpose. The flexible torsion shaft is preferably manufactured by means of pultrusion, in which filament fibres are wound around a preform. Some type of standard filament winder machine can be used. The fibres to be wound around the core wire are soaked in resin and a layer of a chosen thickness is hardened in an oven. The machine winds each layer in two directions, so that by pulling backwards and forwards the winding angles are in opposite directions and the torsion shaft is naturally given symmetrical properties.

According to the invention, the desired strength and stiffness properties are achieved by winding several layers around a core wire, preferably at different winding angles. The main rule for the outer layers to be wound at an averagely steeper angle relative to the core wire. The fibres weigh 50 - 75 % of the total weight.

Steeper winding (e.g., 57°) creates a torsional force (in the outer surface), while a gentler (e.g., 45°) winding angle creates stiffness and tensile strength. The embodiments use suitable combinations to achieve an optimal result. A great torsional force together with flexibility is most easily achieved using urethane combined with a winding angle of 45 - 57°).

The casing tube is preferably of polyamide, so that the material hardness and other properties will minimize friction.

The diameter of the flexible torsion shaft is 2 - 20 mm, preferably 6 - 16 mm. The diameter of the core (wire, cable, or braided cord or rubber, e.g. EPDM) is arranged in such a way that the casing layer has a total thickness of at most 5 mm, preferably at most 3.5 mm.

In brush cleaning devices, the flexible torsion shaft 12 should have a minimum radius of curvature of 30 - 200 cm, preferably 50 - 100 cm. In other uses, such as in a drill's flexible torsion shaft, the flexibility can be substantially smaller.

In the following, the invention is described in greater detail with the aid of an embodiment example with reference to the accompanying drawings, in which

Figure 1    shows a schematic side view of the construction of the flexible shaft
Figure 2    shows an axonometric view of the shaft of Figure 1
Figure 3    shows a cross-section of the shaft of Figure 1
Figure 4    shows the construction of the multi-layer torsion shaft in partial cross-section
Figure 5    shows a cross-section of the shaft of Figure 5
Figure 6    shows one brush cleaning device.
Figure 7    shows schematically an industrial manufacturing method for the shaft.

The components of the flexible shaft arrangement 10 are a casing tube 14 and the torsion shaft 12 itself. The length of the shaft arrangement can be 2 - 40 m and the diameter of the torsion shaft 12 4 - 20 mm.

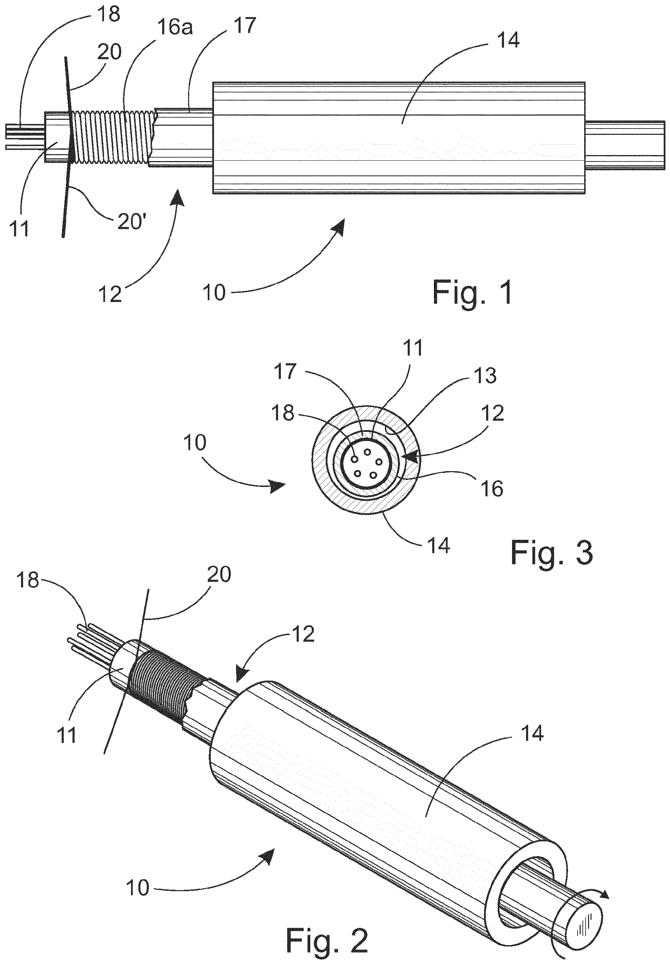

The casing tube 14 is typically of polyamide and is intended to protect structures by keeping the rotating torsion shaft 12 away from, e.g., the duct structures. Polyamide has a low coefficient of friction with most of the polymers binding the reinforcing fibres, namely polyurethane. A particularly advantageous totality is achieved if the flexible shaft is coated with polytetrafluorethylene, i.e., PTFE (Teflon®). Alternatively, the inner surface 13 of the protective tube can be covered with PTFE (Figure 3).

The body of the torsion shaft 12 of Figure 1 is of epoxy and filament wires 20, 20', generally of glass fibre, are wound on top of it in two directions. In this case, the core is a bunch of fibres 18 and a polyethylene membrane 11 is on top of it. Unlike in the figure, the bunch of fibres fills the entire space and the resin is impregnated inside the bunch.

The winding angle of the filament wires 20, 20' is critical to the torsional stiffness. In the figures, the winding angle is in the order of 75° (not part of this invention). Preferably it is 60 - 85°. A gentle winding angle will make the torsion shaft stiff, leading to a large curvature radius. A large winding angle gives good torsional stiffness. Several layers can be wound at different angles to achieve the desired strength and stiffness properties. The main rule is that the outermost layers are always wound at a steeper angle relative to the core wire. The weight of the fibres is 50 - 75 % of the total weight. The harder the polymer the steeper the angle at which the last fibre is wound, otherwise the fibre will begin to abrade through the polymer.

The axial filaments 18, which are important in terms of the tensile strength of the shaft, are marked in the figures.

The flexible torsion shaft has a diameter of 4 - 20 mm, preferably 6 - 12 mm. The length of such shafts is in the range 2 - 40 m. Nominal torque M is in the range 2 - 30 Nm and the torsional shaft's diameter D is then in the range

$$D = 2.2 \text{ mm} \times \sqrt{(M/Nm)} \pm 30\%$$

Typical values:

Length 2 m, diameter 3 mm, nominal torque 2 Nm
Length 30 m, diameter 8 - 12 mm, nominal torque 10 - 30 Nm.

It is important to adjust the material hardness of the casing tube, as it determines the magnitude of the friction.

In one embodiment, the core, i.e., the core wire, is a nylon cord, with epoxy cast on top of it and glass-fibre filaments wound on the surface. The fibre bunch, fabric cord, or braided rubber twine used as the core should be isolated, to prevent the epoxy from being absorbed in the core. Either absorption with oil, or a suitable membrane such as polyethylene can be used to achieve this isolation.

According to the invention, multi-layer reinforcing fibre winding is used and, if necessary, at least two different polymer layers, with a hard inner layer and a more elastic polymer outer layer (not part of this invention). One such polymer pair is Axson tech. (FR) EPOLAM 2040 (hard epoxy) and EPOLAM 8064R (flexible epoxy). Usually, a layer thickness of less than 2 mm does not require a second polymer. The casing layer usually has a thickness of at most 5 mm, preferably at most 3.5 mm. Experience has shown that a layer thickness greater than 4 mm and generally greater than 3.5 mm is of no benefit, as then the torsion shaft loses its elasticity. In the surface layer, polyurethane can be used, which has an elasticity many times that of the elastic epoxy referred to above. The problem with epoxy is its poor elongation, which leads to stiffness in the shaft. The same manufacturer's polyurethane resins are 'RE11550 polyol' and 'RE1020-isocyanate', a mixture of which has an elongation value of 230 %. In addition to these, hybrid resins are available, with different grades of resin, such as epoxy and urethane resins, being arranged together. The core component is intended to prevent buckling in the casing component when the torsion shaft is bent into a curve. It is obvious that as polymers develop the performance values of the end product will develop further. The diameter of drill shafts can be 2 - 8 mm. Shafts with a diameter of 2 - 4 mm, for example, are suitable for opening drainpipes.

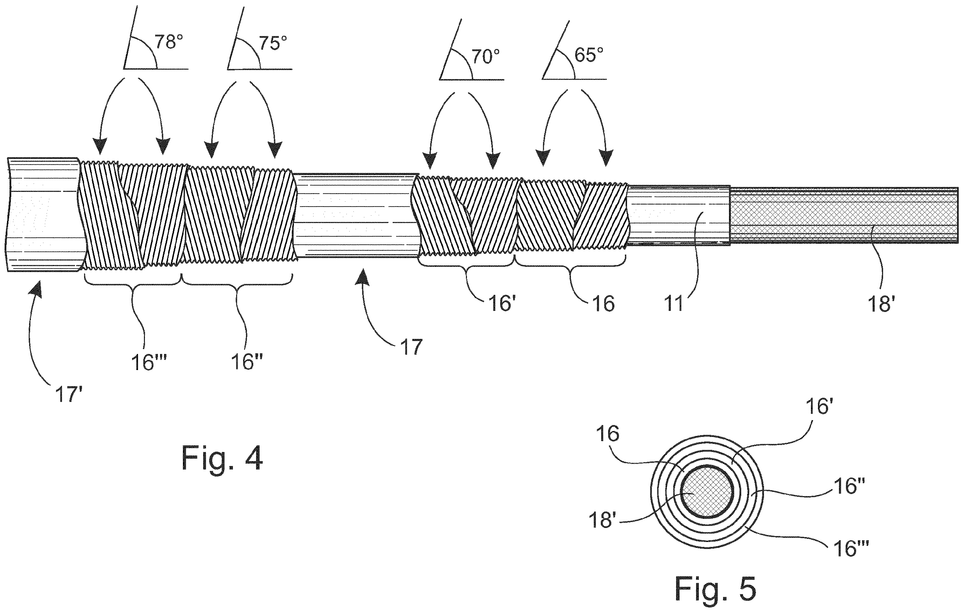

In the latest embodiments, the core is a flexible, braided cord, which allows the internal diameter of the polymer layer to be increased in step with the external diameter. Thus, for example, in one torsion shaft with a diameter of 8 mm (Figures 4 and 5), the rubber core cord 18' (braided) has a diameter of 2 mm. This is topped by a thin (0.1 mm) polyethylene film 11 to prevent the absorption of epoxy resin (not part of this invention) . In the following description the winding angles are out of the scope of the claims, it is to be understood that the winding angles within the scope of the claims are in the range of 45-57 degrees as in appended claim 1; a reinforcing-wire layer 16, with a thickness of 600 Tex (glass-fibre), wound at a gentle winding angle of 65°, comes first in the polymer layer 17 (thickness 1.5 mm). Layers of the same reinforcing-wire follow on top of it at a steeper 70° angle, but alternate in different directions, with a layer 16' of glass-fibre, until a total thickness of 1.5 mm is achieved. A layer 16" of reinforcing-fibre lies in an elastic epoxy layer 17' (thickness 1.5 mm) at an increasingly steep angle (75°), 16" until the last layer 16‴ of 3-mm wire is hoop wound at about 78°. About 14 reinforcing-fibre layers are made with 0.2-mm wire (roving), which make a thickness of about 3 mm together with the epoxy resin.

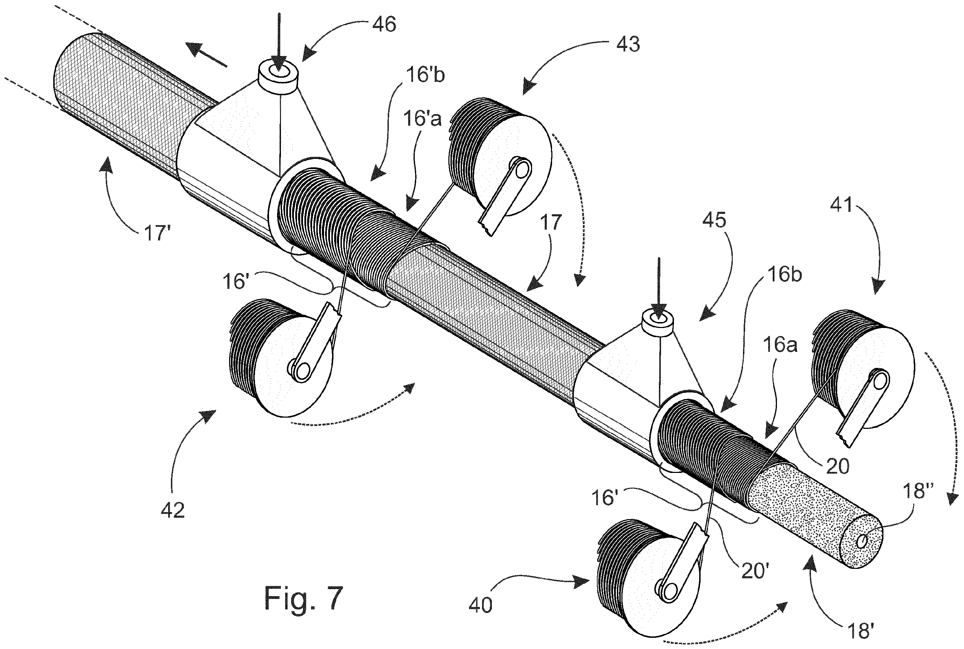

In newer embodiments, the same fibre as in the winding is preferably used as the core, i.e. the centre wire, the centre wire (bunch) beings impregnated with the same resin as the winding layers, because it must have the same heat resistance as them. It is also possible to use, as the centre wire or core cord 18', a round power-transmission belt, in which, for example, there is a polyester thread 18'' and a polyurethane coating (Figure 7).

Reinforcing fibres: glass-fibre, polyamide (Nylon®), aramid (Kevlar®), UHMWPE (Dyneema®), carbon fibre. Rovings to be used 100 - 600 Tex (glass-fibre bunches), in a circular fibre bunch, thickness 0.1 - 1 mm.

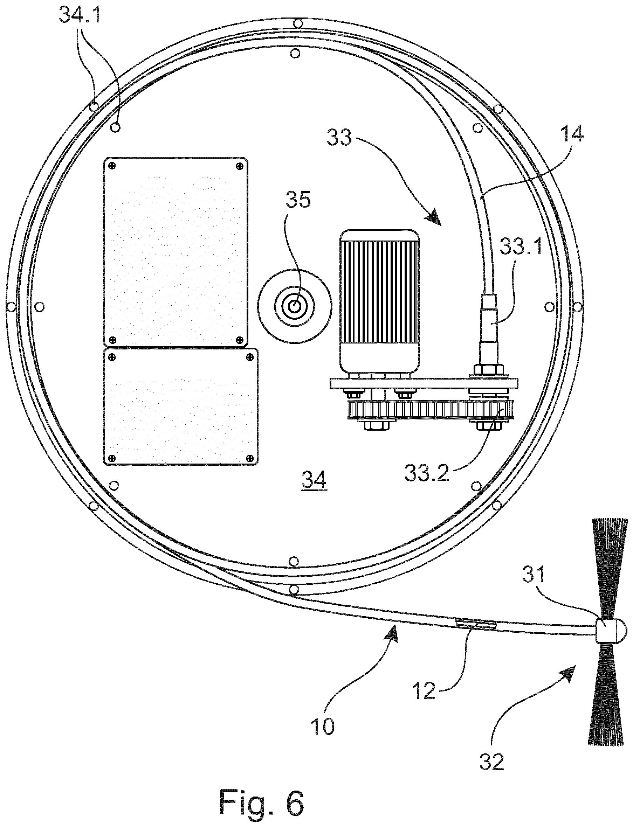

Brush cleaning devices for air-conditioning ducts, of which an example is the device according to utility model FI-U-9567, shown in Figure 6, are a particular application of the flexible torsion shaft. The flexible torsion shaft according to the invention suits nearly all machines designed for a corresponding task, in which the flexible torsion shaft together with the casing tube can be reeled onto a reel of a quite small diameter (60 - 120 cm). The brush cleaning device according to Figure 6, incorporates a disc 34, set to be rotated with the aid of a shaft 35. The circumference of the disc 34 has pins 34.1, between which the flexible torsion shaft 10 with a casing tube is reeled. The brush device 31 is attached to the flexible shaft in the hub 32. The start of the casing tube 14 is permanently attached to the motor assembly's 33 body and the torsion shaft 12 itself is attached to a rotating toothed-belt gearwheel 33.2. The rotating force generally comes through the shaft, however the construction of the rotation device does not fall within the scope of the present invention.

The newest embodiments use the following dimensions.

Table 1.

| Shaft diameter mm | Core thickness mm tolerance ±30 % | Wall thickness mm tolerance ±15 % |
|---|---|---|
| 4 mm | 0.5 mm | 1.75 mm |
| 6 mm | 0.5 mm | 2.75 mm |
| 8 mm | 1 mm | 3.5 mm |
| 10 mm | 3 mm | 3.5 mm |
| 12 mm | 5 mm | 3.5 mm |
| 14 mm | 7 mm | 3.5 mm |
| 16 mm | 9 mm | 3.5 mm |

(continued)

| Shaft diameter mm | Core thickness mm tolerance $\pm 30$ % | Wall thickness mm tolerance $\pm 15$ % |
| --- | --- | --- |
| 18 mm | 10 mm | 4 mm |
| 20 mm | 12 mm | 4 mm |
| 30 mm | 20 mm | 5 mm |

The wall thickness is usually 3.5 mm $\pm 20$ %, if the shaft diameter is 8 mm or greater, and in thinner shafts the wall thickness is usually 45% $\pm 10$ % of the shaft diameter.

In winding, a fibre is used, the thickness of which is 100 tex - 800 tex ($\pm 20$ %), corresponding to the table's diameter range 4 mm - 20 mm.

Preferred matrix: thermosetting polyurethane prepolymer resin.

Shaft coated with Xylan 1010 PTFE coating (Teflon®).

PTFE = "Polytetrafluorethylene".

Core - matrix PU (same).

In industrial manufacture, either cross-winding machines equipped with up to 40-metre-long back-and-forwards winding devices are available, or else continuously operating pull-winding machines (Figure 7), in which there are a chosen number of consecutive winding devices 40/41, 42/43, and extruder units 45,46 for manufacturing a multi-layer shaft. Figure 7 shows the principle of such a machine. For continuous drive, a drive rope is needed, which is preferably a round belt commonly used in transmissions, in which there is a centre thread 18" and a polyurethane coating. For example, an 8-mm Eagle Green 89 Reinforced Textured Round by Fenner Drives, Inc. USA, can be used. This provides a tension of 116 N at an elongation of 3 %.

The core cord 18' can be pulled from a large reel (not shown), which can contain up to several kilometres for continuous production. Figure 7 shows two winding pairs 40/41 and 42/43, but there can be the number of them necessary for the selected layer thickness. In Figure 7, polymer impregnation using extruders 45 and correspondingly 46, takes place after two fibre layers, but several reinforcing-fibre layers can be taken into the same impregnation, provided the polymer is absorbed in the entire layer.

In Figure 7, fibre-layers 16a and 16b, which are impregnated using a first extruder 45 to create a first polymer layer 17, are wound using a winding pair 40/41 on top of a core cord 18'. The use of a retardant approved by the manufacturer may be necessary in the polymer to slow hardening, to allow the polymer layers to integrate with each other. The next fibre winding takes place using winding pairs 42/43, thus forming fibre layers 16'a and 16'b, at a slightly greater angle relative to the shaft than the preceding ones (as in Figure 5). This is led in turn to the following extruder 46, which forms the next polymer layer 17'. This is repeated for as many times as needed to reach the chosen shaft thickness. Due to the winding geometry, each winding machine may have to be arranged separately, because particularly at the start winding takes place at a considerable angle relative to the perpendicular plane, with the next winding slanting at the opposite angle.

**Claims**

1. High-powered and flexible composite torsion shaft (12), which is intended to be attached to a drive shaft, and which torsion shaft (12) has

   - a core element (18) and a reinforcement comprising a polymeric base substance (17, 17') and
   - a multi-layered (16, 16', 16", 16''') reinforcing-fibre reinforcement forming a casing layer around the core element, each reinforcing-fibre layer being wound around the core element (18) by hoop winding, in which in at least one reinforcing-fibre layer (16, 16', 16", 16‴) there is a reinforcing-fibre reinforcement wound alternate in an opposite direction, and where
   - the winding angle is increasing as the average layer diameter increases, and several reinforcing-fibre layers (16, 16', 16", 16‴) are taken into the same impregnation by polymeric base substance (17, 17'), which is absorbing the entire layer (16, 16', 16", 16‴),
   - the core element is preventing buckling in the casing component when the torsion shaft is bent into a curve.
   - a length of the flexible torsion shaft (12) is 2 - 40 m,
   - the nominal torque M is in the range 2 - 30 Nm and the diameter D of the torsion shaft is then in the range D = 2.2 mm x $\sqrt{(M/Nm)}$ $\pm 30$%,
   - the minimum curvature radius of the high-powered flexible torsion shaft (12) is 30 - 200 cm, preferably 50 - 100 cm, and
• the weight of the fibres is 50 - 75 % of the total weight,

**characterized in that** the polymeric base substance (17, 17') is polyurethane-based polymer and said increasing winding angles are in the range of 45 - 57 degrees.

2. Flexible torsion shaft (12) according to Claim 1, **characterized in that** at least one reinforcing fibre is any of the following glass fibre, polyamide, aramid, UHMWPE, or carbon fibre.

3. Flexible torsion shaft (12) according to Claim 1, **characterized in that** the diameters of the shaft, the average core thickness, and the thickness of the layers as a wall follows the values of the following table in the range of several consecutive diameter dimensions:

| Shaft diameter mm | Core thickness mm tolerance $\pm 30$ % | Wall thickness mm tolerance $\pm 15$ % |
| --- | --- | --- |
| 4 mm | 0.5 mm | 1.75 mm |
| 6 mm | 0.5 mm | 2.75 mm |
| 8 mm | 1 mm | 3.5 mm |
| 10 mm | 3 mm | 3.5 mm |
| 12 mm | 5 mm | 3.5 mm |
| 14 mm | 7 mm | 3.5 mm |
| 16 mm | 9 mm | 3.5 mm |
| 18 mm | 10 mm | 4 mm |
| 20 mm | 12 mm | 4 mm |
| 30 mm | 20 mm | 5 mm |

4. Arrangement (10) comprising a torsion shaft according to any of Claims 1 - 3, **characterized in that** there is a casing tube (14) for the torsion shaft (12) and the said casing tube (14) is of polyamide.

5. Arrangement (10) according to Claim 4, **characterized in that** the torsion shaft (12) and an inner surface (13) of the casing tube (14) being the first and second parts, where one part is coated with PTFE, preferably Xylan 1010 PTFE (Teflon®) in order to reduce friction coefficient between the torsion shaft (12) and the casing tube (14).

6. Device for cleaning air-conditioning ducts, comprising an arrangement according to claim 4 to 5, **characterized in that** the device includes reeling means (34, 34.1) for the flexible torsion shaft (12) fitted with the casing tube (14), drive-motor machinery (33) for rotating the flexible torsion shaft (12), and a brush device (32) attached to the free end of the flexible torsion shaft (12).

**Patentansprüche**

1. Leistungsstarke und flexible Verbundtorsionswelle (12), die dazu bestimmt ist, an einer Torsionswelle (12) befestigt zu werden, und die

• ein Kernelement (18) und eine Verstärkung aufweist, umfassend eine polymere Grundsubstanz (17, 17') und
• eine mehrlagige (16, 16', 16", 16‴) Verstärkungsfaserbewehrung, die eine Mantelschicht um das Kernelement bildet, wobei jede Verstärkungsfaserschicht durch Umwickeln um das Kernelement (18) gewickelt ist, wobei in mindestens einer Verstärkungsfaserlage (16, 16', 16", 16‴) eine Verstärkungsfaserbewehrung abwechselnd in einer entgegengesetzten Richtung gewickelt ist, und wobei
• der Wickelwinkel mit zunehmendem durchschnittlichen Schichtdurchmesser zunimmt und mehrere Verstärkungsfaserschichten (16, 16', 16", 16‴) in die gleiche Imprägnierung durch die polymere Grundsubstanz (17, 17') aufgenommen werden, die die gesamte Schicht (16, 16', 16", 16‴) absorbiert,

• das Kernelement ein Ausknicken des Mantelteils verhindert, wenn die Torsionswelle in eine Kurve gebogen wird,
• eine Länge der flexiblen Torsionswelle (12) 2-40 m ist,
• das Nenndrehmoment M im Bereich 2-30 Nm liegt und der Durchmesser D der Torsionswelle dann im Bereich D = 2,2 mm x $\sqrt{(M/Nm)}$ ±30 % liegt,
• der minimale Krümmungsradius der leistungsstarken flexiblen Torsionswelle (12) 30-200 cm, vorzugsweise 50-100 cm, ist und
• das Gewicht der Fasern 50-75 % des Gesamtgewichts ist,

**dadurch gekennzeichnet, dass** die polymere Grundsubstanz (17, 17') ein Polymer auf Polyurethanbasis ist und die zunehmenden Windungswinkel im Bereich von 45-57 Grad liegen.

2. Flexible Torsionswelle (12) nach Anspruch 1, **dadurch gekennzeichnet, dass** mindestens eine Verstärkungsfaser eine der folgenden Fasern ist: Glasfaser, Polyamid, Aramid, UHMWPE oder Kohlefaser.

3. Flexible Torsionswelle (12) nach Anspruch 1, **dadurch gekennzeichnet, dass** die Durchmesser der Welle, die mittlere Kernstärke und die Stärke der Schichten als Wand im Bereich mehrerer aufeinanderfolgender Durchmesserabmessungen den Werten der folgenden Tabelle folgen:

| Durchmesser der Welle mm | Kernstärke mm Toleranz ±30 % | Wandstärke mm Toleranz ±15 % |
| --- | --- | --- |
| 4 mm | 0,5 mm | 1,75 mm |
| 6 mm | 0,5 mm | 2,75 mm |
| 8 mm | 1 mm | 3,5 mm |
| 10 mm | 3 mm | 3,5 mm |
| 12 mm | 5 mm | 3,5 mm |
| 14 mm | 7 mm | 3,5 mm |
| 16 mm | 9 mm | 3,5 mm |
| 18 mm | 10 mm | 4 mm |
| 20 mm | 12 mm | 4 mm |
| 30 mm | 20 mm | 5 mm |

4. Anordnung (10) umfassend eine Torsionswelle nach einem der Ansprüche 1-3, **dadurch gekennzeichnet, dass** ein Mantelrohr (14) für die Torsionswelle (12) vorhanden ist und das Mantelrohr (14) aus Polyamid besteht.

5. Anordnung (10) nach Anspruch 4, **dadurch gekennzeichnet, dass** die Torsionswelle (12) und eine innere Oberfläche (13) des Mantelrohrs (14) der erste und zweite Teil sind, wobei ein Teil mit PTFE, vorzugsweise Xylan 1010 PTFE (Teflon®) beschichtet ist, um den Reibungskoeffizienten zwischen der Torsionswelle (12) und dem Mantelrohr (14) zu verringern.

6. Vorrichtung zum Reinigen von Klimakanälen, umfassend eine Anordnung nach Anspruch 4 bis 5, **dadurch gekennzeichnet, dass** die Vorrichtung Aufwickelmittel (34, 34.1) für die flexible Torsionswelle (12), die mit dem Gehäuserohr (14) verbunden ist, Antriebsmotormaschinen (33) zum Drehen der flexiblen Torsionswelle (12) und eine Bürstenvorrichtung (32), die am freien Ende der flexiblen Torsionswelle (12) angebracht ist, einschließt.

**Revendications**

1. Arbre de torsion composite flexible et de forte puissance (12), conçu pour être fixé à un arbre de transmission, et dont l'arbre de torsion (12) comprend

• un élément central (18) et un renfort composé d'une substance de base polymère (17, 17') et

• d'un renfort en fibre de renforcement à couches multiples (16, 16', 16", 16‴) formant une couche enveloppante autour de l'élément central, chaque couche de fibre de renforcement étant enroulée autour de l'élément central (18) par enroulement radial, dans lequel dans au moins une couche de fibre de renforcement (16, 16', 16", 16‴) se trouve un renfort en fibre de renforcement enroulé dans le sens opposé, et où

• l'angle d'enroulement augmente à mesure que le diamètre moyen de la couche augmente, et plusieurs couches de fibre de renforcement (16, 16', 16", 16‴) sont prises dans la même imprégnation par la substance de base polymère (17, 17'), qui absorbe l'intégralité de la couche (16, 16', 16", 16‴)

• l'élément central empêche la déformation dans le composant enveloppant lorsque l'arbre de torsion est courbé,

• une longueur de l'arbre de torsion flexible (12) est comprise entre 2 et 40 m,

• le couple nominal M se trouve dans la plage 2 à 30 Nm et le diamètre D de l'arbre de torsion se trouve alors dans la plage D = 2,2 mm x $\sqrt{(M/Nm)}$ ± 30 %,

• le rayon de courbure minimal de l'arbre de torsion flexible de forte puissance (12) est compris entre 30 et 200 cm, de préférence entre 50 et 100 cm, et

• le poids des fibres représente entre 50 et 75 % du poids total,

**caractérisé en ce que** la substance de base polymère (17, 17') est un polymère à base de polyuréthane et lesdits angles d'enroulement se trouvent dans la plage de 45 à 57 degrés.

2. Arbre de torsion flexible (12) conformément à la revendication 1, **caractérisé en ce qu'**au moins une fibre de renforcement est l'une des fibres de verre suivantes : polyamide, aramide, UHMWPE ou fibre de carbone.

3. Arbre de torsion flexible (12) conformément à la revendication 1, **caractérisé en ce que** les diamètres de l'arbre, l'épaisseur moyenne de l'élément central et l'épaisseur des couches en tant que paroi suivent les valeurs du tableau ci-après dans la plage de plusieurs dimensions de diamètre consécutives :

| Diamètre de l'arbre (mm) | Épaisseur de l'élément central (mm) tolérance ± 30 % | Épaisseur de la paroi (mm) tolérance ± 15 % |
|---|---|---|
| 4 mm | 0,5 mm | 1,75 mm |
| 6 mm | 0,5 mm | 2,75 mm |
| 8 mm | 1 mm | 3,5 mm |
| 10 mm | 3 mm | 3,5 mm |
| 12 mm | 5 mm | 3,5 mm |
| 14 mm | 7 mm | 3,5 mm |
| 16 mm | 9 mm | 3,5 mm |
| 18 mm | 10 mm | 4 mm |
| 20 mm | 12 mm | 4 mm |
| 30 mm | 20 mm | 5 mm |

4. Agencement (10) composé d'un arbre de torsion selon l'une quelconque des revendications 1 à 3, **caractérisé par** la présence d'un tube enveloppant (14) pour l'arbre de torsion (12) et par le fait que ledit tube enveloppant (14) est en polyamide.

5. Agencement (10) conformément à la revendication 4, **caractérisé en ce que** l'arbre de torsion (12) et une surface interne (13) du tube enveloppant (14) constituent la première et la deuxième parties, où une partie est enduite de PTFE, de préférence de PTFE Xylan 1010 (Teflon®) afin de réduire le coefficient de frottement entre l'arbre de torsion (12) et le tube enveloppant (14).

6. Dispositif de nettoyage de conduits de climatisation, composé d'un agencement conformément aux revendications 4 à 5, **caractérisé en ce que** le dispositif inclut des moyens d'enroulement (34, 34,1) pour l'arbre de torsion flexible (12) équipé du tube enveloppant (14), d'une machinerie de moteur d'entraînement (33) pour la rotation de l'arbre de torsion flexible (12), et d'un dispositif de brossage (32) fixé à l'extrémité libre de l'arbre de torsion flexible (12).

Fig. 1

Fig. 3

Fig. 2

Fig. 4

Fig. 5

Fig. 6

Fig. 7

EP 3 290 127 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2573361 A
- WO 2016142586 A